# EUROPEAN PATENT APPLICATION

(11) **EP 4 654 319 A1**
(43) Date of publication of application: **26.11.2025**
(21) Application number: 24860326.8
(22) Date of filing: 23.08.2024
(51) Int. Cl.: H01M 10/0567, H01M 10/052, H01M 10/42

(54) **SECONDARY BATTERY ELECTROLYTE ADDITIVE, LITHIUM SECONDARY BATTERY NON-AQUEOUS ELECTROLYTE COMPRISING SAME, AND LITHIUM SECONDARY BATTERY**

(30) Priority: 31.08.2023 KR 20230115746
(71) Applicant: LG Energy Solution, Ltd., Seoul 07335 (KR)
(72) Inventor: KWON, Soon Ho, Daejeon 34122 (KR); KIM, Sung Hwan, Daejeon 34122 (KR); LEE, Seok Kyeong, Daejeon 34122 (KR); KIM, Dong Hoon, Daejeon 34122 (KR)
(74) Representative: Hoffmann Eitle
(86) International application number: PCT/KR2024/012583
(87) International publication number: WO 2025/048406

(57) **Abstract**

The present disclosure relates to an electrolyte solution additive for a lithium secondary battery, and a non-aqueous electrolyte solution for a lithium secondary battery and a lithium secondary battery which include the same. The electrolyte solution additive for a lithium secondary battery may include the compound represented by Formula 1.

## Description

### TECHNICAL FIELD

### Cross-reference to Related Applications

This application claims priority from Korean Patent Application No. 10-2023-0115746, filed on August 31, 2023, the disclosure of which is incorporated by reference herein.

### Technical Field

The present disclosure relates to an electrolyte solution additive for a secondary battery, and a non-aqueous electrolyte solution for a lithium secondary battery and a lithium secondary battery which include the same, and more particularly, to an electrolyte solution additive for a secondary battery which has an excellent effect of scavenging a decomposition product generated from a lithium salt, and a non-aqueous electrolyte solution for a lithium secondary battery and a lithium secondary battery which include the same.

### BACKGROUND ART

As dependence on electrical energy is gradually increasing in modern society, renewable energy generation, which may increase production without causing environmental problems, has emerged as a next-generation power generation system.

With respect to renewable energy, since it exhibits intermittent power generation characteristics, a large-capacity power storage device is indispensable to supply power stably. A lithium-ion battery is in the spotlight as a device which is currently commercialized and exhibits the highest energy density among power storage devices.

The lithium-ion battery is composed of a positive electrode formed of a transition metal oxide containing lithium, a negative electrode capable of storing the lithium, an electrolyte solution that includes a non-aqueous organic solvent containing a lithium salt, and a separator, and LiPF₆ has mainly been used as the representative lithium salt.

However, since the LiPF₆ is very vulnerable to heat, it generates a Lewis acid, such as PF₅, while being thermally decomposed when the battery is exposed to high temperatures. Such a Lewis acid material not only causes a decomposition reaction of the non-aqueous organic solvent such as ethylene carbonate, but also degrades a passivation film, such as a solid electrolyte interphase (SEI), formed on a surface of the electrode to cause additional decomposition of the electrolyte solution, an increase in resistance, and dissolution of transition metal from the positive electrode. Also, dissolved transition metal ions become a cause of increasing resistance of the positive electrode while being re-deposited on the positive electrode, and, in contrast, since the dissolved transition metal ions cause self-discharge of the negative electrode by being transferred to the negative electrode through the electrolyte solution and then electrodeposited on the negative electrode or cause destruction and regeneration of the solid electrolyte interphase to additionally consume lithium ions, the dissolved transition metal ions become a cause of increasing resistance and degrading lifetime.

Thus, in order to suppress a degradation behavior of the battery when the battery is exposed to high temperatures, there is a need for a method that may suppress an additional electrolyte decomposition reaction by reducing degradation of the SEI which is caused by by-products, such as HF and PF₅, formed by thermal decomposition of the lithium salt.

### DISCLOSURE OF THE INVENTION

### TECHNICAL PROBLEM

An aspect of the present disclosure provides an electrolyte solution additive for a secondary battery which may scavenge a decomposition product generated from a lithium salt and may simultaneously form a robust passivation film on surfaces of a positive electrode and a negative electrode.

Another aspect of the present disclosure provides a non-aqueous electrolyte solution for a lithium secondary battery, which may achieve excellent high-temperature stability and high-temperature cycle characteristics by including the above electrolyte solution additive for a secondary battery, and a lithium secondary battery including the same.

### TECHNICAL SOLUTION

[1] The present disclosure provides an electrolyte solution additive for a secondary battery which includes a compound represented by Formula 1: 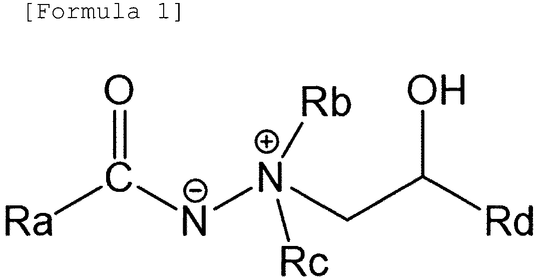 In Formula 1,
   Ra is an alkyl group having 1 to 10 carbon atoms, an alkoxy group having 1 to 10 carbon atoms, -(R)n-R₀ (R is oxygen or an alkylene group having 1 to 3 carbon atoms, R₀ is an aryl group having 6 to 10 carbon atoms, and n is at least one integer of 0 to 5), or -R₁-O-R₂ (R₁ is an alkylene group having 1 to 3 carbon atoms, and R₂ is an aryl group having 6 to 10 carbon atoms), and
   Rb, Rc, and Rd are each independently hydrogen or an alkyl group having 1 to 10 carbon atoms.
[2] The present disclosure provides the electrolyte solution additive for a secondary battery of [1] above, wherein the alkyl group or the alkoxy group is substituted with an alkyl group having 1 to 3 carbon atoms or at least one fluorine.
[3] The present disclosure provides the electrolyte solution additive for a secondary battery of [1] or [2] above, wherein, in Formula 1, Ra is an alkyl group having 1 to 8 carbon atoms, an alkoxy group having 1 to 8 carbon atoms,-(R)n-R₀ (R is oxygen or an alkylene group having 1 to 3 carbon atoms, R₀ is an aryl group having 6 to 8 carbon atoms, and n is at least one integer of 0 to 3), or -R₁-O-R₂ (R₁ is an alkylene group having 1 to 3 carbon atoms, and R₂ is an aryl group having 6 to 8 carbon atoms), and Rb, Rc, and Rd are each independently hydrogen or an alkyl group having 1 to 8 carbon atoms.
[4] The present disclosure provides the electrolyte solution additive for a secondary battery of at least one of [1] to [3] above, wherein, in Formula 1, Ra is an alkyl group having 1 to 5 carbon atoms, an alkoxy group having 1 to 5 carbon atoms, or -(R)n-R₀ (R is oxygen or an alkylene group having 1 to 3 carbon atoms, R₀ is an aryl group having 6 to 8 carbon atoms, and n is an integer of 0 or 1), and Rb, Rc, and Rd are each independently hydrogen or an alkyl group having 1 to 5 carbon atoms.
[5] The present disclosure provides the electrolyte solution additive for a secondary battery of at least one of [1] to [4] above, wherein, in Formula 1, Ra is an alkyl group having 1 to 3 carbon atoms or -(R)n-R₀ (R is oxygen or an alkylene group having 1 to 3 carbon atoms, R₀ is an aryl group having 6 to 8 carbon atoms, and n is an integer of 0 or 1), and Rb, Rc, and Rd are each independently an alkyl group having 1 to 3 carbon atoms.
[6] The present disclosure provides the electrolyte solution additive for a secondary battery of at least one of [1] to [5] above, wherein the compound represented by Formula 1 is at least one selected from compounds represented by Formulae 1A to 1D. 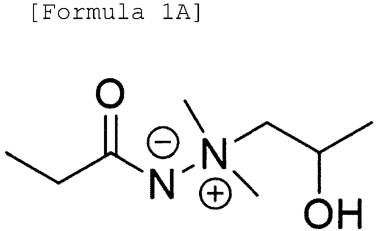 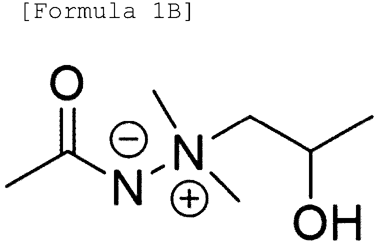 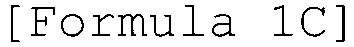 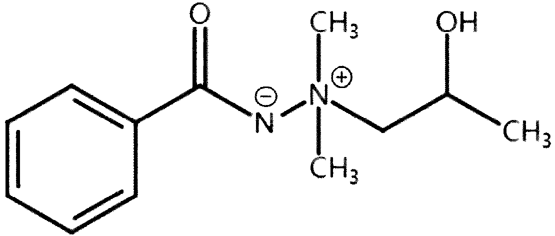 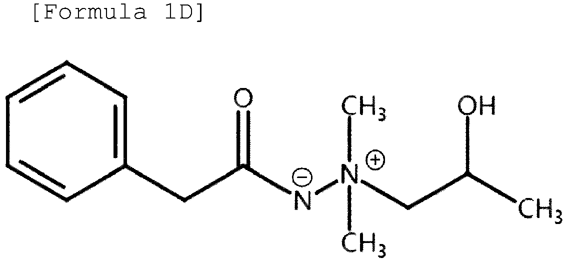
[7] The present disclosure provides a non-aqueous electrolyte solution for a lithium secondary battery which includes the electrolyte solution additive for a secondary battery of [1] above.
[8] The present disclosure provides the non-aqueous electrolyte solution for a lithium secondary battery of [7] above, wherein the electrolyte solution additive for a secondary battery is present in an amount of 0.1 wt% to 10.0 wt% based on a total weight of the non-aqueous electrolyte solution for a lithium secondary battery.
[9] The present disclosure provides the non-aqueous electrolyte solution for a lithium secondary battery of [7] or [8] above, wherein the non-aqueous electrolyte solution for a lithium secondary battery further includes a lithium salt and a non-aqueous organic solvent.
[10] The present disclosure provides the non-aqueous electrolyte solution for a lithium secondary battery of at least one of [7] to [9] above, wherein the non-aqueous electrolyte solution for a lithium secondary battery further includes at least one other additive selected from a halogen-unsubstituted or substituted carbonate-based compound, a sultone-based compound, a sulfate-based compound, a phosphate-based or phosphite-based compound, a borate-based compound, a nitrile-based compound, an amine-based compound, a silane-based compound, or a lithium salt-based compound.
[11] The present disclosure provides a lithium secondary battery which includes a positive electrode including a positive electrode active material; a negative electrode including a negative electrode active material; a separator disposed between the negative electrode and the positive electrode; and the non-aqueous electrolyte solution for a lithium secondary battery of [7] above.

### ADVANTAGEOUS EFFECTS

A non-aqueous electrolyte solution for a lithium secondary battery of the present disclosure may effectively scavenge a Lewis acid generated as a decomposition product of a lithium salt and may form a more stable solid electrolyte interphase (SEI) on a surface of a negative electrode by including a compound represented by Formula 1, which includes an isocyanate unit and a nitrogen atom of a cationic moiety that may act as a Lewis base in its molecular structure, as an electrolyte solution additive.

Thus, if the non-aqueous electrolyte solution for a lithium secondary battery of the present disclosure is used, since the non-aqueous electrolyte solution for a lithium secondary battery of the present disclosure may effectively suppress dissolution of transition metal from a positive electrode by forming the stable film on surfaces of the positive electrode or negative electrode and may simultaneously reduce degradation of the SEI by scavenging by-products generated by thermal decomposition of the lithium salt, a lithium secondary battery having improved high-temperature durability, such as high-temperature storage characteristics and high-temperature cycle characteristics, may be achieved.

### BRIEF DESCRIPTION OF THE DRAWINGS

The following drawings attached to the specification illustrate preferred examples of the present disclosure by example, and serve to enable technical concepts of the present disclosure to be further understood together with detailed description of the invention given below, and therefore the present disclosure should not be interpreted only with matters in such drawings.
FIG. 1 is a nuclear magnetic resonance (NMR) graph of a compound prepared in Example 1.
FIG. 2 is an NMR graph of a compound prepared in Example 2.

### MODE FOR CARRYING OUT THE INVENTION

First, before describing the present disclosure, it is understood that words or terms used in the specification and claims shall not be interpreted as the meaning defined in commonly used dictionaries, and it is further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It is further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

Before describing the present disclosure, the expressions "a" and "b" in the description of "a to b carbon atoms" in the specification each denote the number of carbon atoms included in a specific functional group. That is, the functional group may include "a" to "b" carbon atoms.

Also, unless otherwise defined in the specification, the expression "substitution" denotes that at least one hydrogen bonded to carbon is substituted with an element other than hydrogen, for example, an alkyl group having 1 to 5 carbon atoms or a fluorine element.

In general, with respect to a lithium secondary battery, high-temperature storage characteristics may be secured by forming a film having passivation ability on surfaces of a positive electrode and a negative electrode while a non-aqueous electrolyte solution is decomposed during initial charge and discharge. However, the film may be degraded by a Lewis acid material, such as HF and PF₅, formed by thermal decomposition of a lithium salt (LiPF₆, etc.) widely used in a lithium-ion battery. That is, since surface resistance of the electrode is increased due to a change in structure of the surface if dissolution of transition metal elements occurs from the positive electrode by attack of the Lewis acid material and theoretical capacity is reduced as the metallic elements, as redox centers, are lost, capacity may be reduced. Also, since transition metal ions thus dissolved are electrodeposited on the negative electrode reacting in a strong reduction potential range to not only consume electrons, but also destruct the film when electrodeposited to expose the surface of the negative electrode, an additional non-aqueous electrolyte solution decomposition reaction may be caused. As a result, capacity of a cell may be continuously reduced while resistance of the negative electrode and irreversible capacity are increased.

Thus, the present disclosure aims at providing an electrolyte solution additive for a lithium secondary battery, which may have an excellent effect of scavenging a decomposition product generated from the lithium salt and may form a robust passivation film on the surfaces of the positive electrode and the negative electrode, and a non-aqueous electrolyte solution for a lithium secondary battery and a lithium secondary battery which include the same.

Hereinafter, the present disclosure will be described in detail.

An electrolyte solution additive for a secondary battery according to the present disclosure, and a non-aqueous electrolyte solution for a lithium secondary battery and a lithium secondary battery, which include the same, include at least one of configurations disclosed below, and may include any combination between technically possible configurations among the configurations below.

### Electrolyte Solution Additive for Secondary Battery

In the present disclosure, provided is an electrolyte solution additive for a secondary battery which includes a compound represented by the following Formula 1.

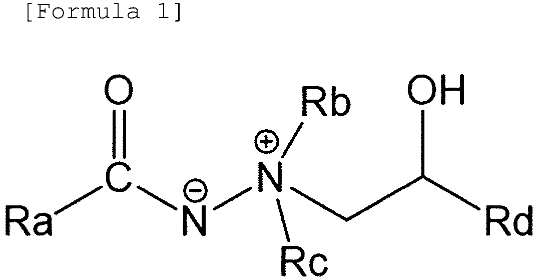

In Formula 1,
Ra is an alkyl group having 1 to 10 carbon atoms, an alkoxy group having 1 to 10 carbon atoms, -(R)n-R₀ (R is oxygen or an alkylene group having 1 to 3 carbon atoms, R₀ is an aryl group having 6 to 10 carbon atoms, and n is at least one integer of 0 to 5), or -R₁-O-R₂ (R₁ is an alkylene group having 1 to 3 carbon atoms, and R₂ is an aryl group having 6 to 10 carbon atoms), and
Rb, Rc, and Rd are each independently hydrogen or an alkyl group having 1 to 10 carbon atoms.

In this case, the alkyl group or the alkoxy group may be substituted with an alkyl group having 1 to 3 carbon atoms or at least one fluorine.

In Formula 1, Ra may be an alkyl group having 1 to 8 carbon atoms, an alkoxy group having 1 to 8 carbon atoms, - (R)n-R₀ (R is oxygen or an alkylene group having 1 to 3 carbon atoms, R₀ is an aryl group having 6 to 8 carbon atoms, and n is at least one integer of 0 to 3), or -R₁-O-R₂ (R₁ is an alkylene group having 1 to 3 carbon atoms, and R₂ is an aryl group having 6 to 8 carbon atoms), and Rb, Rc, and Rd may each independently be hydrogen or an alkyl group having 1 to 8 carbon atoms.

Also, in Formula 1, Ra may be an alkyl group having 1 to 5 carbon atoms, an alkoxy group having 1 to 5 carbon atoms, or -(R)n-R₀ (R is oxygen or an alkylene group having 1 to 3 carbon atoms, R₀ is an aryl group having 6 to 8 carbon atoms, and n is an integer of 0 or 1), and Rb, Rc, and Rd may each independently be hydrogen or an alkyl group having 1 to 5 carbon atoms.

Furthermore, in Formula 1, Ra may be an alkyl group having 1 to 3 carbon atoms or -(R)n-R₀ (R is oxygen or an alkylene group having 1 to 3 carbon atoms, R₀ is an aryl group having 6 to 8 carbon atoms, and n is an integer of 0 or 1), and Rb, Rc, and Rd may each independently be an alkyl group having 1 to 3 carbon atoms.

Specifically, the compound represented by Formula 1 may be at least one selected from compounds represented by Formulae A to 1D below.

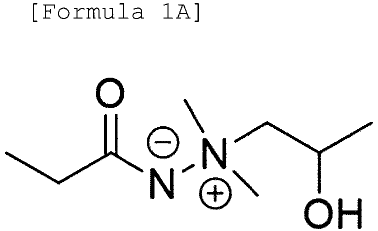

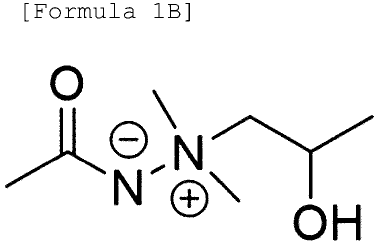

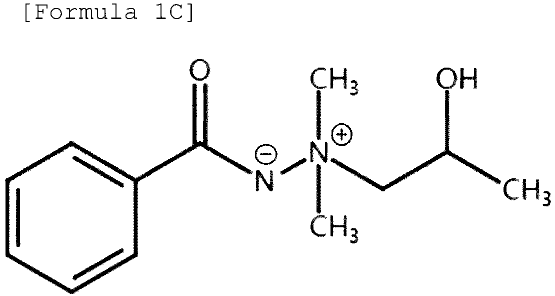

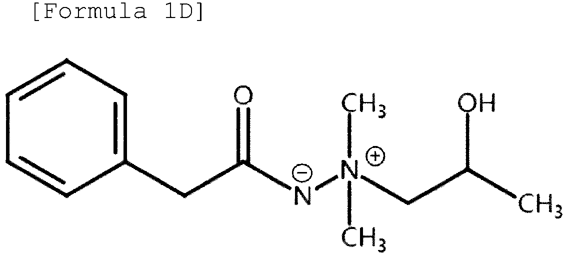

The compound represented by Formula 1 is a compound in a form of an organic salt, wherein, since it may be easily dissolved in major non-aqueous electrolyte solution solvents such as ethylene carbonate, propylene carbonate, dimethyl carbonate, or diethyl carbonate which will be described later, a uniform non-aqueous electrolyte solution may be prepared.

Particularly, according to Reaction Formula 1 below, when a specific temperature of 50°C or higher and pressure are applied to the compound represented by Formula 1, the compound represented by Formula 1 may be decomposed into a compound including an isocyanate unit and a compound including an amino alcohol unit by Curtius rearrangement. In this case, while a nitrogen element having an unshared electron pair, which is present in a molecular structure of the decomposed compound, acts as a Lewis base to form high binding energy with a Lewis acid material generated as a decomposition product of the lithium salt, it may easily scavenge the decomposition product of the lithium salt. Also, the compound including the isocyanate unit may form a nitrogen (N) atom-based film (SEI) with high durability, which is not easily decomposed and may be maintained when the battery is exposed to high temperatures, by a reaction at a reaction site where a phenol group or carbonyl group is formed as the surface of the negative electrode is partially oxidized. Furthermore, with respect to the compound including the amino alcohol unit, in-situ trapping is possible when HF is generated by an acid-base reaction with the decomposition product of the lithium salt, for example, HF, and, as a result, since the compound including the amino alcohol unit suppresses the generation of the HF to prevent damage to the film, it may suppress metal dissolution from the positive electrode or negative electrode.

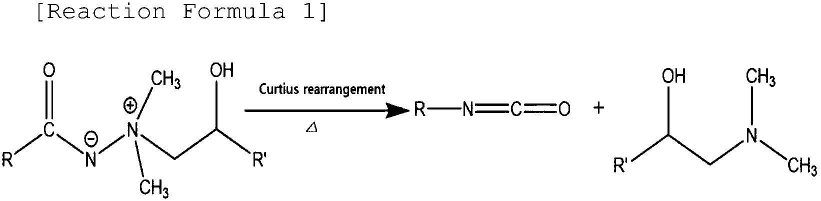

### Non-aqueous Electrolyte Solution for Lithium Secondary Battery

Also, according to the present disclosure, a non-aqueous electrolyte for a lithium secondary battery, which includes the electrolyte solution additive for a secondary battery, is provided.

### (1) Electrolyte Solution Additive for Secondary Battery

The non-aqueous electrolyte solution for a lithium secondary battery of the present disclosure may include the electrolyte solution additive for a secondary battery which includes the compound represented by Formula 1, and, in this case, since a description of the compound overlaps with that described above, the description thereof will be omitted.

In consideration of an effect of forming a stable film on the surface of the electrode and an effect of scavenging a thermal decomposition product of the lithium salt, the electrolyte solution additive for a secondary battery may be included in an amount of 10.0 wt% or less, and specifically, 0.1 wt% to 8.0 wt% based on a total weight of the non-aqueous electrolyte solution.

If the amount of the electrolyte solution additive for a secondary battery included is within the above range, the dissolution of the transition metal of a positive electrode active material at high temperatures may be effectively suppressed by forming a robust film on the surface of the positive electrode while reducing disadvantages, such as a side reaction due to the additive, a reduction in capacity, and an increase in resistance, as much as possible, and excellent high-temperature durability may be achieved by effectively scavenging the thermal decomposition product of the lithium salt.

That is, if the amount of the electrolyte solution additive for a secondary battery is 0.1 wt% or more, the effect of scavenging the thermal decomposition product of the lithium salt may be maintained even if operation time is increased, and the effect of suppressing the dissolution of the transition metal may be further improved by forming a stable film on the surface of the electrode. Also, if the amount of the electrolyte solution additive for a secondary battery is 8.0 wt% or less, the side reaction caused by the somewhat large amount of the additive may be prevented.

Specifically, the electrolyte solution additive for a secondary battery may be included in an amount of 0.1 wt% to 5.0 wt%, specifically 0.1 wt% to 4.0 wt%, and preferably 0.3 wt% to 3.0 wt% based on the total weight of the non-aqueous electrolyte solution.

As described above, since the non-aqueous electrolyte solution of the present disclosure includes the electrolyte solution additive for a secondary battery which includes the compound represented by Formula 1, a more robust passive film may be formed at an interface between the electrode and the electrolyte to control a negative electrode reduction reaction of additional transition metals due to decomposition of the SEI and prevent electrodeposition of the transition metal, which is dissolved during high-temperature storage, on the negative electrode. Thus, a lithium secondary battery with improved high-temperature durability and long-term lifetime as well as initial performance may be prepared by suppressing a side reaction when using a nickel-rich positive electrode active material.

Also, the non-aqueous electrolyte solution for a lithium secondary battery of the present disclosure may further include a lithium salt and a non-aqueous organic solvent.

### (2) Lithium Salt

Any lithium salt typically used in an electrolyte solution for a lithium secondary battery may be used as the lithium salt without limitation, and, for example, the lithium salt may include Li⁺ as a cation, and may include at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, or SCN⁻ as an anion.

Specifically, the lithium salt may include a single material selected from LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis(fluorosulfonyl)imide, LiFSI), LiN(SO₂CF₂CF₃)₂ (lithium bis(perfluoroethanesulfonyl)imide, LiBETI), or LiN(SO₂CF₃)₂ (lithium bis(trifluoromethanesulfonyl)imide, LiTFSI) or a mixture of two or more thereof. In addition to them, a lithium salt typically used in an electrolyte solution of a lithium secondary battery may be used without limitation.

The lithium salt may be appropriately changed in a normally usable range, but may be included in a concentration of 0.8 M to 4.0 M, and specifically, 1.0 M to 3.0 M in the electrolyte solution to obtain an optimum effect of forming a film for preventing corrosion of the surface of the electrode.

In a case in which the concentration of the lithium salt satisfies the above range, low-temperature output characteristics and cycle characteristics during high-temperature storage may be improved by improving mobility of lithium ions, and viscosity of the non-aqueous electrolyte solution may be controlled so that optimum impregnability may be achieved.

### (3) Non-aqueous Organic Solvent

Also, a non-aqueous organic solvent will be described as follows.

Various organic solvents typically used in a non-aqueous electrolyte solution may be used as the non-aqueous organic solvent without limitation, wherein a type of the non-aqueous organic solvent is not limited as long as the non-aqueous organic solvent may minimize decomposition due to an oxidation reaction during charge and discharge of the secondary battery and may exhibit desired characteristics with the additive.

Specifically, the non-aqueous organic solvent may include a cyclic carbonate-based organic solvent, a linear carbonate-based organic solvent, or a mixed organic solvent thereof.

The cyclic carbonate-based organic solvent is a highly viscous organic solvent which well dissociates the lithium salt in a non-aqueous electrolyte solution due to high permittivity, wherein specific examples thereof may be at least one non-aqueous organic solvent selected from ethylene carbonate (EC), propylene carbonate (PC), 1,2-butylene carbonate, 2,3-butylene carbonate, 1,2-pentylene carbonate, 2,3-pentylene carbonate, or vinylene carbonate, and, among them, the cyclic carbonate-based organic solvent may include ethylene carbonate.

The linear carbonate-based organic solvent is an organic solvent having low viscosity and low permittivity, wherein typical examples thereof may be at least one non-aqueous organic solvent selected from dimethyl carbonate (DMC), diethyl carbonate (DEC), dipropyl carbonate, ethyl methyl carbonate (EMC), methylpropyl carbonate, or ethylpropyl carbonate, and the linear carbonate-based organic solvent may specifically include dimethyl carbonate (DMC) or ethyl methyl carbonate (EMC).

The cyclic carbonate non-aqueous organic solvent and the linear carbonate non-aqueous organic solvent may be mixed and used as the non-aqueous organic solvent of the present disclosure, and, in this case, the cyclic carbonate non-aqueous organic solvent and the linear carbonate non-aqueous organic solvent may be used by being mixed in a volume ratio of 10:90 to 50:50, and specifically, 20:80 to 30:70.

Furthermore, in order to prepare an electrolyte solution having high ionic conductivity, the non-aqueous organic solvent may further include a linear ester-based non-aqueous organic solvent and/or a cyclic ester-based non-aqueous organic solvent with a low melting point and high stability at high temperatures.

As a representative example, the linear ester-based non-aqueous organic solvent may include at least one non-aqueous organic solvent selected from methyl acetate, ethyl acetate, propyl acetate, methyl propionate, ethyl propionate, propyl propionate, or butyl propionate.

Also, the cyclic ester-based non-aqueous organic solvent may include at least one non-aqueous organic solvent selected from γ-butyrolactone, γ-valerolactone, γ-caprolactone, o-valerolactone, or ε-caprolactone.

A remainder excluding components excluding the non-aqueous organic solvent in the non-aqueous electrolyte solution of the present disclosure, for example, the electrolyte solution additive for a secondary battery of the present disclosure and the lithium salt may all be the non-aqueous organic solvent unless otherwise stated.

The non-aqueous electrolyte solution for a lithium secondary battery of the present disclosure may further include other additives to be described later, if necessary, in order to prevent the occurrence of collapse of the negative electrode due to the decomposition of the non-aqueous electrolyte solution in a high power environment or to further improve battery characteristics such as low-temperature high rate discharge characteristics, high-temperature stability, overcharge prevention, and an effect of suppressing battery swelling at high temperature.

### (4) Other Additives

The other additives may include at least one selected from a halogen-unsubstituted or substituted carbonate-based compound, a sultone-based compound, a sulfate-based compound, a phosphate-based or phosphite-based compound, a borate-based compound, a nitrile-based compound, an amine-based compound, a silane-based compound, or a lithium salt-based compound, and may more specifically include a halogen-unsubstituted or substituted carbonate-based compound.

Typical examples of the halogen-unsubstituted or substituted carbonate-based compound may be vinylene carbonate (VC), vinylethylene carbonate, or fluoroethylene carbonate (FEC).

The sultone-based compound may be at least one compound selected from 1,3-propane sultone (PS), 1,4-butane sultone, ethane sultone, or 1,3-propene sultone (PRS).

The sulfate-based compound, for example, may be ethylene sulfate (Esa), trimethylene sulfate (TMS), or methyl trimethylene sulfate (MTMS).

The phosphate-based or phosphite-based compound may be at least one compound selected from lithium difluoro(bisoxalato)phosphate, lithium difluorophosphate, tris(trimethylsilyl)phosphite, or tris(2,2,2-trifluoroethyl)phosphate.

The borate-based compound may be tetraphenylborate, lithium oxalyldifluoroborate (LiODFB), or lithium bisoxalatoborate (LiB(C₂O₄)₂; LiBOB).

The nitrile-based compound, for example, may be at least one compound selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile.

The lithium salt-based compound is a compound different from the lithium salt included in the non-aqueous electrolyte solution, wherein the lithium salt-based compound may include LiPO₂F₂ or LiBF₄.

Two or more compounds may be mixed and used as the other additives, and the other additives may be included in an amount of 0.01 wt% to 10 wt%, particularly 0.05 wt% to 7 wt%, and preferably 0.1 wt% to 5 wt% based on the total weight of the non-aqueous electrolyte solution.

If the amount of the other additives included is within the above range, an effect of improving low-temperature output characteristics, high-temperature storage characteristics, and high-temperature life characteristics of the secondary battery may be obtained, and a side reaction of the battery due to the excessive amount of the additives may be prevented. Also, that an unreacted material is formed in the electrolyte solution at room temperature or the other additives may be present in the form of precipitates due to insufficient decomposition of the other additives at high temperature may be prevented.

### Lithium Secondary Battery

Next, a lithium secondary battery according to the present disclosure will be described.

The lithium secondary battery according to the present disclosure includes a positive electrode, a negative electrode, a separator disposed between the positive electrode and the negative electrode, and a non-aqueous electrolyte solution, and, in this case, the non-aqueous electrolyte solution may include the non-aqueous electrolyte solution according to the present disclosure. Since the non-aqueous electrolyte solution has been described above, a description thereof will be omitted and other components will be described below.

### (1) Positive Electrode

The positive electrode according to the present disclosure may include a positive electrode active material layer including a positive electrode active material.

The positive electrode active material is a compound capable of reversibly intercalating and deintercalating lithium, wherein the positive electrode active material may specifically include a lithium composite metal oxide represented by the following Formula 2 which includes lithium and at least one metal selected from nickel (Ni), cobalt (Co), manganese (Mn), or aluminum (Al).

[Formula 2] Li₁₊ₐNiₓCo_{y}M¹_{z}M²_{w}O₂

In Formula 2,
M¹ is Mn, Al, or a combination thereof,
M² is at least one selected from Al, zirconium (Zr), tungsten (W), titanium (Ti), magnesium (Mg), calcium (Ca), or strontium (Sr), and 0≤a≤0.5, 0.55<x<1.0, 0<y≤0.4, 0<z≤0.4, and 0≤w≤0.1.

1+a represents an atomic fraction of lithium in the lithium composite metal oxide, wherein a may satisfy 0≤a≤0.5, preferably 0≤a≤0.2, and more preferably 0≤a≤0.1. When a molar ratio of the lithium satisfies the above range, a crystal structure of the lithium-nickel-cobalt-transition metal (M) oxide may be stably formed.

x represents a molar ratio of nickel among total metals excluding lithium in the lithium composite metal oxide, wherein x may satisfy 0.55<x<1.0, particularly 0.6≤x≤0.98, and more particularly 0.6≤x≤0.95. When the molar ratio of the nickel satisfies the above range, high energy density may be exhibited to achieve high capacity.

y represents an atomic fraction of cobalt among the total metals excluding lithium in the lithium composite metal oxide, wherein y may satisfy 0<y≤0.4, particularly 0<y≤0.3, and more particularly 0.05≤y≤0.3. When a molar ratio of the cobalt satisfies the above range, good resistance characteristics and output characteristics may be achieved.

z represents a molar ratio of M¹ element among the total metals excluding lithium in the lithium composite metal oxide, wherein z may satisfy 0<z≤0.4, preferably 0<z≤0.3, and more preferably 0.01≤z≤0.3. When the molar ratio of the element M¹ satisfies the above range, structural stability of the positive electrode active material is excellent.

w represents a molar ratio of M² element among the total metals excluding lithium in the lithium composite metal oxide, wherein w may satisfy 0<w≤0.1, preferably 0<w≤0.05, and more preferably 0<w≤0.02.

Specifically, it is desirable that the positive electrode active material may include a lithium composite transition metal oxide, such as Li(Ni_{0.6}Mn_{0.2}CO_{0.2})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.03}Co_{0.05})O₂, in which a Ni content is 0.55 atm% or more, in order to achieve a high-capacity battery.

With respect to the nickel (Ni)-rich lithium composite metal oxide, after charge and discharge, or when exposed to high temperatures, it causes a side reaction as transition metal ions are dissolved due to structural collapse of the positive electrode.

For example, a nickel ion (Ni²⁺) included in the Ni-rich lithium composite metal oxide exists in a form of a stable nickel ion before charge and discharge, and changes into a Ni³⁺ ion or Ni⁴⁺ ion as an oxidation number increases after the charge and discharge. Unlike the stable Ni²⁺ ion, the Ni³⁺ ion or Ni⁴⁺ ion may be reduced to the Ni²⁺ ion while rapid oxygen desorption occurs due to instability. In this case, since the desorbed oxygen reacts with the electrolyte solution to change surface properties of the electrode or increase charge transfer impedance of the surface to reduce capacity or high-rate capability, it causes a problem of reducing energy density. This phenomenon is further intensified on a surface of a Ni-rich positive electrode.

Also, if the structural collapse of the positive electrode occurs due to the high-temperature exposure, Ni²⁺ cations are dissolved from the positive electrode into the electrolyte solution, and the dissolved Ni²⁺ cations react with the passivation film (SEI) of the negative electrode to decompose the SEI film. As a result, a portion of negative electrode active material may be exposed to the electrolyte solution to cause degradation of capacity and life characteristics and an increase in resistance due to a side reaction. This problem may be accelerated when a large amount of HF or the like is present in the electrolyte solution.

Thus, in order to solve these various problems, it is very important to form a robust film capable of preventing the side reaction with the electrolyte solution and providing surface stability on the surface of the Ni-rich positive electrode.

In the present disclosure, since stabilization of the film on the surface of the positive electrode including the Ni-rich lithium composite metal oxide is achieved by employing the non-aqueous electrolyte solution including the compound represented by Formula 1 as an additive, contact of the desorbed oxygen or Ni⁴⁺ ions with the electrolyte solution may be prevented to reduce the side reaction and the dissolution of the transition metals from the positive electrode may be effectively suppressed.

The positive electrode active material in the present disclosure may further include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (0<Y<1), LiMn_{2-Z}Ni_{z}O₄ (0<Z<2)), lithium-nickel-cobalt-based oxide (e.g., LiNi_{1-Y1}Co_{Y1}O₂ (0<Y1<1)), lithium-manganese-cobalt-based oxide (e.g., LiCo_{1-Y2}Mn_{Y2}O₂ (0<Y2<1), LiMn_{2-Z1}Co_{z1}O₄ (0<Z1<2)), or Li(Niₚ₁Co_{q1}Mnᵣ₂)O₄ (0<p1<2, 0<q1<2, 0<r2<2, and p1+q1+r2=2) in addition to the above-described Ni-rich lithium composite metal oxide.

The positive electrode active material may be included in an amount of 80 wt% to 98 wt%, more specifically, 85 wt% to 98 wt% based on a total weight of the positive electrode active material layer. When the positive electrode active material is present in an amount within the above range, excellent capacity characteristics may be exhibited.

Also, the positive electrode active material layer of the present disclosure may further include a conductive agent and/or a binder, if necessary.

The conductive agent is used to provide conductivity to the electrode, wherein any conductive agent may be used without particular limitation as long as it has suitable electron conductivity without causing adverse chemical changes in the battery. Specific examples of the conductive agent may be carbon black such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives, and any one thereof or a mixture of two or more thereof may be used.

The conductive agent may be included in an amount of 0.1 wt% to 10 wt%, and preferably, 0.1 wt% to 5 wt% based on the total weight of the positive electrode active material layer.

Next, the binder improves the adhesion between positive electrode active material particles and the adhesion between the positive electrode active material and a current collector.

As an example of the binder, any one of a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; or a silane-based binder or a mixture of two or more thereof may be used.

The binder may be included in an amount of 0.1 wt% to 15 wt%, and preferably, 0.1 wt% to 10 wt% based on the total weight of the positive electrode active material layer.

The positive electrode of the present disclosure may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled to form an active material layer, or a method in which the positive electrode active material layer is cast on a separate support and a film separated from the support is then laminated on the positive electrode collector.

The positive electrode collector is not particularly limited as long as it has conductivity without causing chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if a positive electrode material mixture may be adjusted to have appropriate viscosity in consideration of a coating thickness of the positive electrode material mixture, manufacturing yield, and workability, and is not particularly limited.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

Various negative electrode active materials used in the art, for example, a carbon-based negative electrode active material, a silicon-based negative electrode active material, or a mixture thereof may be used as the negative electrode active material.

According to an embodiment, the negative electrode active material may include a carbon-based negative electrode active material, and, as the carbon-based negative electrode active material, various carbon-based negative electrode active materials used in the art, for example, a graphite-based materials such as natural graphite, artificial graphite, or Kish graphite; pyrolytic carbon, mesophase pitch based carbon fiber, meso-carbon microbeads, mesophase pitches, high-temperature sintered carbon such as petroleum or coal tar pitch derived cokes, soft carbon, or hard carbon may be used. A shape of the carbon-based negative electrode active material is not particularly limited, and materials of various shapes, such as an irregular shape, planar shape, flaky shape, spherical shape, or fibrous shape, may be used.

Preferably, the carbon-based negative electrode active material may include at least one of natural graphite or artificial graphite. More preferably, the carbon-based negative electrode active material may include natural graphite and artificial graphite. In a case in which the natural graphite and the artificial graphite are used together, adhesion with a current collector may be increased to suppress exfoliation of the active material.

According to another embodiment, the negative electrode active material may include a silicon-based negative electrode active material together with the carbon-based negative electrode active material.

The silicon-based negative electrode active material, for example, may include at least one selected from metallic silicon (Si), silicon oxide (SiOₓ, where 0<x<2), silicon carbide (SiC), or a Si-Y alloy (where Y is an element selected from alkali metal, alkaline earth metal, a Group 13 element, a Group 14 element, transition metal, a rare earth element, or a combination thereof, and is not Si). The element Y may be selected from Mg, Ca, Sr, barium (Ba), radium (Ra), scandium (Sc), yttrium (Y), Ti, Zr, hafnium (Hf), rutherfordium (Rf), Vanadium (V), niobium (Nb), tantalum (Ta), dubnium (Db), chromium (Cr), molybdenum (Mo), W, seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), Ti, germanium (Ge), phosphorus (P), arsenic (As), antimony (Sb), bismuth (Bi), sulfur (S), selenium (Se), tellurium (Te), polonium (Po), or a combination thereof.

Since the silicon-based negative electrode active material has higher capacity characteristics than the carbon-based negative electrode active material, better capacity characteristics may be obtained when the silicon-based negative electrode active material is further included. However, with respect to a negative electrode including the silicon-based negative electrode active material, it contains more oxygen (O)-rich (O-rich) components in the SEI than a graphite negative electrode, and the SEI containing the O-rich components tends to be more easily decomposed when a Lewis acid, such as HF or PF₅, is present in the electrolyte solution. Thus, with respect to the negative electrode including the silicon-based negative electrode active material, there is a need to suppress the formation of the Lewis acid, such as HF and PF₅, in the electrolyte solution or remove (or scavenge) the formed Lewis acid in order to stably maintain the SEI. Since the non-aqueous electrolyte solution according to the present disclosure includes the electrolyte solution additive capable of forming a stable film on the positive electrode and the negative electrode, it may effectively suppress the decomposition of the SEI when the negative electrode including the silicon-based negative electrode active material is used.

A mixing ratio of the carbon-based negative electrode active material to the silicon-based negative electrode active material may be in a range of 1:99 to 97:3, preferably 85:15 to 95:5, and more preferably 90:10 to 97:3.

In a case in which the mixing ratio of the carbon-based negative electrode active material to the silicon-based negative electrode active material satisfies the above range, since a volume expansion of the silicon-based negative electrode active material is suppressed while capacity characteristics are improved, excellent cycle performance may be secured.

The negative electrode active material may be included in an amount of 80 wt% to 99 wt% based on a total weight of the negative electrode active material layer. In a case in which the amount of the negative electrode active material satisfies the above range, excellent capacity characteristics and electrochemical properties may be obtained.

Next, the conductive agent is a component for further improving conductivity of the negative electrode active material, wherein the conductive agent may be added in an amount of 10 wt% or less, preferably, 5 wt% or less based on the total weight of the negative electrode active material layer. Any conductive agent may be used without particular limitation so long as it has conductivity without causing chemical changes in the battery, and, for example, carbon black such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives may be used.

The binder is a component that assists in the binding between the conductive agent, the active material, and the current collector, wherein the binder is commonly added in an amount of 0.1 wt% to 10 wt% based on the total weight of the negative electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; or a silane-based binder.

The binder may be included in an amount of 0.1 wt% to 15 wt%, and preferably, 0.1 wt% to 10 wt% based on the total weight of the negative electrode active material layer.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, or an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have appropriate viscosity in consideration of a coating thickness of a negative electrode material mixture, manufacturing yield, and workability, and is not particularly limited.

### (3) Separator

The lithium secondary battery according to the present disclosure includes a separator between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution as well as low resistance to the transfer of ions of the lithium salt may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, or an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The lithium secondary battery according to the present disclosure as described above may be suitably used in portable devices, such as mobile phones, notebook computers, and digital cameras, and electric cars such as a hybrid electric vehicle (HEV).

Thus, according to another embodiment of the present disclosure, a battery module including the lithium secondary battery as a unit cell and a battery pack including the battery module are provided.

The battery module or the battery pack may be used as a power source of at least one medium or large sized device of a power tool; electric cars including an electric vehicle (EV), a hybrid electric vehicle (HEV), and a plug-in hybrid electric vehicle (PHEV); or a power storage system.

A shape of the lithium secondary battery of the present disclosure is not particularly limited, but a cylindrical type using a can, a prismatic type, a pouch type, or a coin type may be used.

The lithium secondary battery according to the present disclosure may not only be used in a battery cell that is used as a power source of a small device, but may also be used as a unit cell in a medium or large sized battery module including a plurality of battery cells.

Hereinafter, the present disclosure will be described in detail, according to specific examples.

### Examples

### I. Preparation of Electrolyte Solution Additive for Secondary Battery

### Example 1.

Ethyl formate (manufacturer: Merck), propylene oxide (manufacturer: Merck), and dimethyl hydrazine (manufacturer: Merck) were added and dissolved in isopropyl alcohol (manufacturer: Merck), and then stirred at 55°C for 72 hours (see Reaction Formula 2 below).

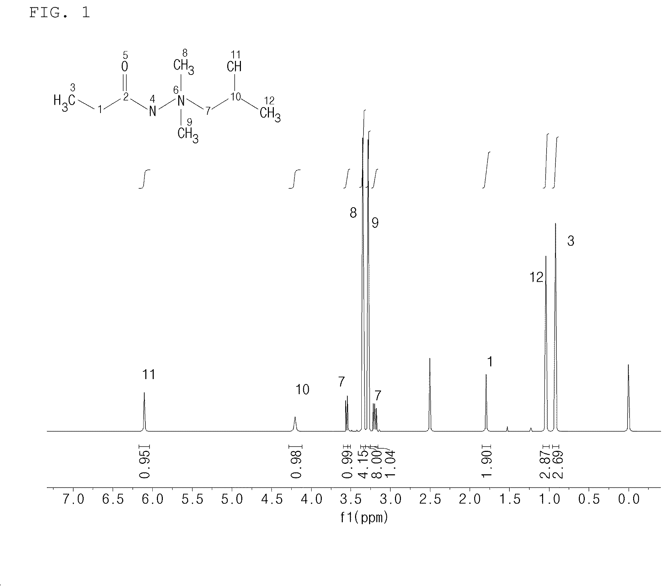

Subsequently, after a solvent was removed by using a solvent condenser (manufacturer: heidloph), recrystallization was performed using ethyl acetate to obtain a white solid. The obtained white solid was dried in a vacuum oven to obtain the compound of Formula 1A (see FIG. 1) (yield: 71%).

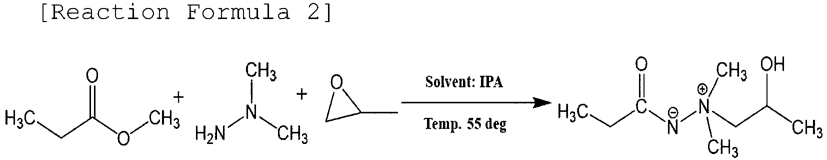

### Example 2.

Methyl formate (manufacturer: Merck), propylene oxide, and dimethyl hydrazine were added and dissolved in isopropyl alcohol, and then stirred at 55°C for 72 hours (see Reaction Formula 3 below).

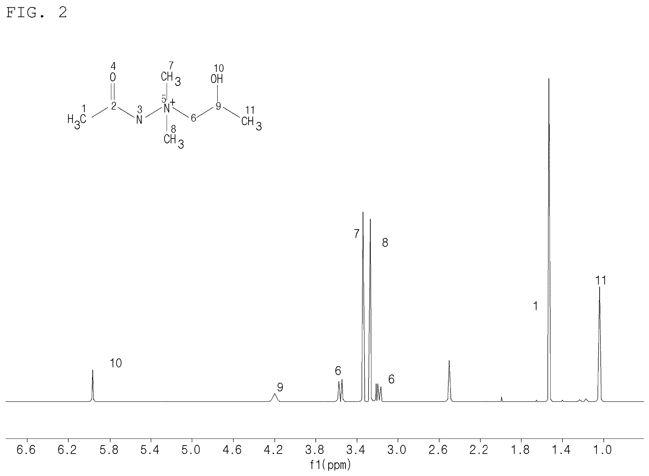

Subsequently, after a solvent was removed by using a solvent condenser, recrystallization was performed using ethyl acetate to obtain a white solid. The obtained white solid was dried in a vacuum oven to obtain the compound of Formula 1B (see FIG. 2) (yield: 83%).

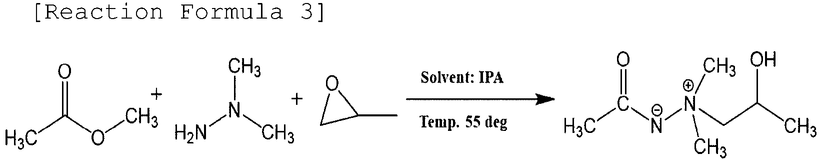

### II. Lithium Secondary Battery Preparation

### Example 3.

### (Preparation of Non-aqueous Electrolyte Solution for Lithium Secondary Battery)

After LiPF₆ was dissolved in a non-aqueous organic solvent, in which ethylene carbonate (EC) and dimethyl carbonate (DMC) were mixed in a volume ratio of 30:70, such that a concentration of the LiPF₆ was 1.2 M, a non-aqueous electrolyte solution for a lithium secondary battery was prepared by adding 0.5 wt% of the compound represented by Formula 1A, and 2.0 wt% of vinylene carbonate and 1.0 wt% of 1,3-propane sultone as other additives.

### (Positive Electrode Preparation)

Positive electrode active material particles (Li(Ni_{0.8}Co_{0.1}Mn_{0.1})O₂), carbon black as a conductive agent, and polyvinylidene fluoride (PVDF), as a binder, were added to N-methyl-2-pyrrolidone (NMP), as a solvent, at a weight ratio of 97.5:1:1.5 to prepare a positive electrode active material slurry (solid content 48 wt%). A 15 µm thick positive electrode collector (Al thin film) was coated with the positive electrode active material slurry, dried, and then roll-pressed to prepare a positive electrode.

### (Negative Electrode Preparation)

A negative electrode active material (natural graphite:SiO = 96:4 weight ratio), PVDF as a binder, and carbon black, as a conductive agent, were added to NMP, as a solvent, at a weight ratio of 95:3.5:1.5 to prepare a negative electrode active material slurry (solid content: 70 wt%). A 6 µm thick negative electrode collector (Cu thin film) was coated with the negative electrode active material slurry, dried, and then roll-pressed to prepare a negative electrode.

### (Secondary Battery Preparation)

After an electrode assembly was prepared by a conventional method of sequentially stacking a polyethylene porous film with the positive electrode and negative electrode prepared by the above-described methods, the electrode assembly was put in a cylindrical secondary battery case, and the above-prepared non-aqueous electrolyte solution for a lithium secondary battery was injected thereinto to prepare a lithium secondary battery.

### Example 4.

### (Preparation of Non-aqueous Electrolyte Solution for Lithium Secondary Battery)

A non-aqueous electrolyte solution for a lithium secondary battery was prepared in the same manner as in Example 3 except that 1.0 wt% of the compound represented by Formula 1A, and 2.0 wt% of vinylene carbonate and 1.0 wt% of 1,3-propane sultone, as other additives, were added to a non-aqueous organic solvent.

### (Secondary Battery Preparation)

A lithium secondary battery was prepared in the same manner as in Example 3 except that the above-prepared non-aqueous electrolyte solution for a lithium secondary battery was injected.

### Example 5.

### (Preparation of Non-aqueous Electrolyte Solution for Lithium Secondary Battery)

A non-aqueous electrolyte solution for a lithium secondary battery was prepared in the same manner as in Example 3 except that 3.0 wt% of the compound represented by Formula 1A, and 2.0 wt% of vinylene carbonate and 1.0 wt% of 1,3-propane sultone, as other additives, were added to a non-aqueous organic solvent.

### (Secondary Battery Preparation)

A lithium secondary battery was prepared in the same manner as in Example 3 except that the above-prepared non-aqueous electrolyte solution for a lithium secondary battery was injected.

### Example 6.

### (Preparation of Non-aqueous Electrolyte Solution for Lithium Secondary Battery)

A non-aqueous electrolyte solution for a lithium secondary battery was prepared in the same manner as in Example 3 except that the compound represented by Formula 1B was added instead of the compound represented by Formula 1A to a non-aqueous organic solvent.

### (Secondary Battery Preparation)

A lithium secondary battery was prepared in the same manner as in Example 3 except that the above-prepared non-aqueous electrolyte solution for a lithium secondary battery was injected.

### Example 7.

### (Preparation of Non-aqueous Electrolyte Solution for Lithium Secondary Battery)

A non-aqueous electrolyte solution for a lithium secondary battery was prepared in the same manner as in Example 4 except that the compound represented by Formula 1B was added instead of the compound represented by Formula 1A to a non-aqueous organic solvent.

### (Secondary Battery Preparation)

A lithium secondary battery was prepared in the same manner as in Example 4 except that the above-prepared non-aqueous electrolyte solution for a lithium secondary battery was injected.

### Example 8.

### (Preparation of Non-aqueous Electrolyte Solution for Lithium Secondary Battery)

A non-aqueous electrolyte solution for a lithium secondary battery was prepared in the same manner as in Example 5 except that the compound represented by Formula 1B was added instead of the compound represented by Formula 1A to a non-aqueous organic solvent.

### (Secondary Battery Preparation)

A lithium secondary battery was prepared in the same manner as in Example 5 except that the above-prepared non-aqueous electrolyte solution for a lithium secondary battery was injected.

### Example 9.

### (Preparation of Non-aqueous Electrolyte Solution for Lithium Secondary Battery)

A non-aqueous electrolyte solution for a lithium secondary battery was prepared in the same manner as in Example 4 except that the compound represented by Formula 1C was added instead of the compound represented by Formula 1A to a non-aqueous organic solvent.

### (Secondary Battery Preparation)

A lithium secondary battery was prepared in the same manner as in Example 4 except that the above-prepared non-aqueous electrolyte solution for a lithium secondary battery was injected.

### Example 10.

### (Preparation of Non-aqueous Electrolyte Solution for Lithium Secondary Battery)

A non-aqueous electrolyte solution for a lithium secondary battery was prepared in the same manner as in Example 4 except that the compound represented by Formula 1D was added instead of the compound represented by Formula 1A to a non-aqueous organic solvent.

### (Secondary Battery Preparation)

A lithium secondary battery was prepared in the same manner as in Example 4 except that the above-prepared non-aqueous electrolyte solution for a lithium secondary battery was injected.

### Example 11.

### (Preparation of Non-aqueous Electrolyte Solution for Lithium Secondary Battery)

A non-aqueous electrolyte solution for a lithium secondary battery was prepared in the same manner as in Example 3 except that 10.0 wt% of the compound represented by Formula 1A, and 2.0 wt% of vinylene carbonate and 1.0 wt% of 1,3-propane sultone, as other additives, were added to a non-aqueous organic solvent.

### (Secondary Battery Preparation)

A lithium secondary battery was prepared in the same manner as in Example 3 except that the above-prepared non-aqueous electrolyte solution for a lithium secondary battery was injected.

### Example 12.

### (Preparation of Non-aqueous Electrolyte Solution for Lithium Secondary Battery)

A non-aqueous electrolyte solution for a lithium secondary battery was prepared in the same manner as in Example 3 except that 0.1 wt% of the compound represented by Formula 1A, and 2.0 wt% of vinylene carbonate and 1.0 wt% of 1,3-propane sultone, as other additives, were added to a non-aqueous organic solvent.

### (Secondary Battery Preparation)

A lithium secondary battery was prepared in the same manner as in Example 3 except that the above-prepared non-aqueous electrolyte solution for a lithium secondary battery was injected.

### Comparative Example 1.

### (Preparation of Non-aqueous Electrolyte Solution for Lithium Secondary Battery)

After LiPF₆ was dissolved in a non-aqueous organic solvent, in which ethylene carbonate (EC) and dimethyl carbonate (DMC) were mixed in a volume ratio of 30:70, such that a concentration of the LiPF₆ was 1.2 M, a non-aqueous electrolyte solution for a lithium secondary battery was prepared by adding 2.0 wt% of vinylene carbonate and 1.0 wt% of 1,3-propane sultone.

### (Secondary Battery Preparation)

A lithium secondary battery was prepared in the same manner as in Example 3 except that the above-prepared non-aqueous electrolyte solution for a lithium secondary battery was injected instead of the non-aqueous electrolyte solution for a lithium secondary battery of Example 3.

### Comparative Example 2.

### (Preparation of Non-aqueous Electrolyte Solution for Lithium Secondary Battery)

A non-aqueous electrolyte solution for a lithium secondary battery was prepared in the same manner as in Example 3 except that a compound represented by Formula 3 below was added instead of the compound represented by Formula 1A.

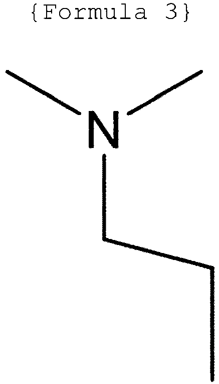

### (Secondary Battery Preparation)

A lithium secondary battery was prepared in the same manner as in Example 3 except that the above-prepared non-aqueous electrolyte solution for a lithium secondary battery was injected.

### Comparative Example 3.

### (Preparation of Non-aqueous Electrolyte Solution for Lithium Secondary Battery)

A non-aqueous electrolyte solution for a lithium secondary battery was prepared in the same manner as in Example 3 except that a compound represented by Formula 4 below was added instead of the compound represented by Formula 1A.

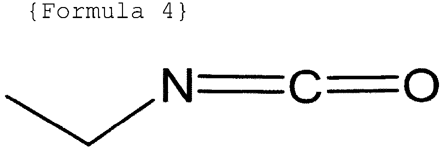

### (Secondary Battery Preparation)

A lithium secondary battery was prepared in the same manner as in Example 3 except that the above-prepared non-aqueous electrolyte solution for a lithium secondary battery was injected.

**[Table 1]**

| | Lithium salt | Non-aqueous organic solvent | Additive | | Other additiv es (wt%) |
|---|---|---|---|---|---|
| | | | Formula | Amount (wt %) | |
| Example 3 | | | 1A | 0.5. | |
| Example 4 | | | 1A | 1.0 | |
| Example 5 | | | 1A | 3.0 | |
| Example 6 | | | 1B | 0.5 | |
| Example 7 | | | 1B | 1.0 | |
| Example 8 | | | 1B | 3.0 | |
| Example 9 | 1.2 M LiPF6 | EC:DMC= 30:70 volume ratio | 1C | 1.0 | VC 2.0/PS 1.0 |
| Example 10 | | | 1D | 1.0 | |
| Example 11 | | | 1A | 10.0 | |
| Example 12 | | | 1A | 0.1 | |
| Comparative Example 1 | | | - | - | |
| Comparative Example 2 | | | 3 | 0.5 | |
| Comparative Example 3 | | | 4 | 0.5 | |

In Table 1, the abbreviation of each compound has the following meaning.
EC: ethylene carbonate
EMC: ethylmethyl carbonate
VC: vinylene carbonate
PS: 1,3-propane sultone

### Experimental Examples

### Experimental Example 1: Capacity Retention Evaluation After High-temperature Storage

After each of the lithium secondary batteries prepared in Examples 3 to 12 and the lithium secondary batteries prepared in Comparative Examples 1 to 3 was fully charged (state of charge (SOC) of 100%) at 0.5 C rate to 4.25 V and a cut-off current of 0.05 C under a constant current/constant voltage condition at room temperature (25°C) and discharged at 0.5 C rate under a constant current condition to 2.5 V, discharge capacity before high-temperature storage was measured using PNE-0506 charge/discharge equipment (manufacturer: PNE solution).

Then, after each lithium secondary battery was stored at 55°C for 2 months, capacity after high-temperature storage was measured for each lithium secondary battery, and a high-temperature capacity retention (%) was then calculated using [Equation 1] below. The results thereof are listed in Table 2 below. Capacity retention(%) = (discharge capacity after 2 months high-temperature storage/discharge capacity before high-temperature storage) × 100

### Experimental Example 2. Resistance Increase Rate Evaluation After High-temperature Storage

After each of the lithium secondary batteries prepared in Examples 3 to 12 and the lithium secondary batteries prepared in Comparative Examples 1 to 3 was charged at 0.5 C rate to 4.25 V under a constant current/constant voltage condition at room temperature (25°C), each lithium secondary battery was discharged to a DOD (depth of discharge) of 50% to adjust an SOC to 50% and then discharged at 0.5 C rate for 10 seconds, and initial resistance was measured using PNE-0506 charge/discharge equipment (manufacturer: PNE solution).

Then, after each lithium secondary battery was stored at 55°C for 2 months, a resistance value of each lithium secondary battery was measured, and a resistance increase rate (%) was calculated using [Equation 2] below. The results thereof are listed in Table 2 below. Resistance increase rate (%) = {(resistance value after 2 months high-temperature storage - resistance value before high-temperature storage)/resistance value before high-temperature storage} × 100

### Experimental Example 3. Gas Generation Amount Evaluation After High-temperature Storage

Each of the lithium secondary batteries prepared in Examples 3 to 12 and the lithium secondary batteries prepared in Comparative Examples 1 to 3 was fully charged to an SOC of 100% at 0.5 C rate to 4.25 V under a constant current/constant voltage condition at room temperature (25°C).

Then, after each lithium secondary battery was stored at 72°C for 2 months, a gas generation amount (%) after high-temperature storage was measured for each lithium secondary battery, and the results thereof are listed in Table 2 below.

**[Table 2]**

| | Capacity retention after high-temperature storage (%) | Resistance increase rate after high-temperature storage (%) | Gas generation amount after high-temperature storage (%) |
|---|---|---|---|
| Example 3 | 95.7 | 7.4 | 11.4 |
| Example 4 | 95.6 | 6.9 | 12.5 |
| Example 5 | 95.1 | 8.1 | 14.1 |
| Example 6 | 95.5 | 7.0 | 13.2 |
| Example 7 | 95.5 | 7.4 | 12.6 |
| Example 8 | 95.0 | 8.1 | 15.7 |
| Example 9 | 94.8 | 8.1 | 13.9 |
| Example 10 | 93.9 | 8.5 | 14.7 |
| Example 11 | 93.1 | 10.1 | 20.4 |
| Example 12 | 94.8 | 7.2 | 12.2 |
| Comparative Example 1 | 92.1 | 15.8 | 30.3 |
| Comparative Example 2 | 93.3 | 18.3 | 35.1 |
| Comparative Example 3 | 92.7 | 21.1 | 37.2 |

Referring to Table 2, it may be understood that the secondary batteries of Examples 3 to 12 of the present disclosure had improved capacity retentions (%) after high-temperature storage, resistance increase rates (%) after high-temperature storage, and gas generation amounts (%) in comparison to the secondary batteries of Comparative Examples 1 to 3.

## Claims

1. An electrolyte solution additive for a secondary battery, the electrolyte solution additive comprising a compound represented by Formula 1: 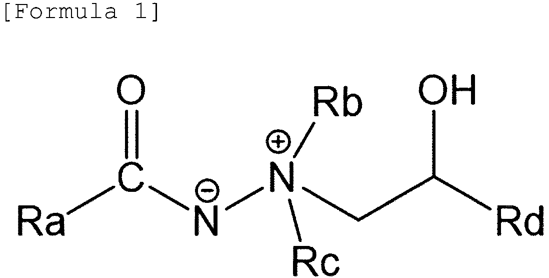 wherein, in Formula 1,
Ra is an alkyl group having 1 to 10 carbon atoms, an alkoxy group having 1 to 10 carbon atoms, -(R)n-R₀ wherein R is oxygen or an alkylene group having 1 to 3 carbon atoms, R₀ is an aryl group having 6 to 10 carbon atoms, and n is an integer of 0 to 5, or -R₁-O-R₂ wherein R₁ is an alkylene group having 1 to 3 carbon atoms, and R₂ is an aryl group having 6 to 10 carbon atoms, and
Rb, Rc, and Rd are each independently hydrogen or an alkyl group having 1 to 10 carbon atoms.

2. The electrolyte solution additive for a secondary battery of claim 1, wherein the alkyl group or the alkoxy group is substituted with an alkyl group having 1 to 3 carbon atoms or at least one fluorine.

3. The electrolyte solution additive for a secondary battery of claim 1, wherein, in Formula 1, Ra is an alkyl group having 1 to 8 carbon atoms, an alkoxy group having 1 to 8 carbon atoms, -(R)n-R₀ wherein R is oxygen or an alkylene group having 1 to 3 carbon atoms, R₀ is an aryl group having 6 to 8 carbon atoms, and n is an integer of 0 to 3, or -R₁-O-R₂ wherein R₁ is an alkylene group having 1 to 3 carbon atoms, and R₂ is an aryl group having 6 to 8 carbon atoms, and
Rb, Rc, and Rd are each independently hydrogen or an alkyl group having 1 to 8 carbon atoms.

4. The electrolyte solution additive for a secondary battery of claim 1, wherein, in Formula 1, Ra is an alkyl group having 1 to 5 carbon atoms, an alkoxy group having 1 to 5 carbon atoms, or -(R)n-R₀ wherein R is oxygen or an alkylene group having 1 to 3 carbon atoms, R₀ is an aryl group having 6 to 8 carbon atoms, and n is an integer of 0 or 1, and
Rb, Rc, and Rd are each independently hydrogen or an alkyl group having 1 to 5 carbon atoms.

5. The electrolyte solution additive for a secondary battery of claim 1, wherein, in Formula 1, Ra is an alkyl group having 1 to 3 carbon atoms or -(R)n-R₀ wherein R is oxygen or an alkylene group having 1 to 3 carbon atoms, R₀ is an aryl group having 6 to 8 carbon atoms, and n is an integer of 0 or 1, and
Rb, Rc, and Rd are each independently an alkyl group having 1 to 3 carbon atoms.

6. The electrolyte solution additive for a secondary battery of claim 1, wherein the compound represented by Formula 1 is at least one selected from compounds represented by Formulae 1A to 1D:

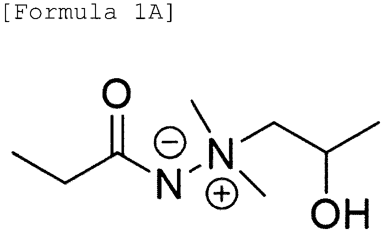

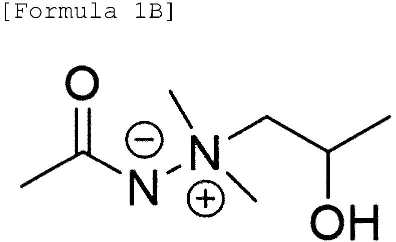

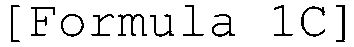

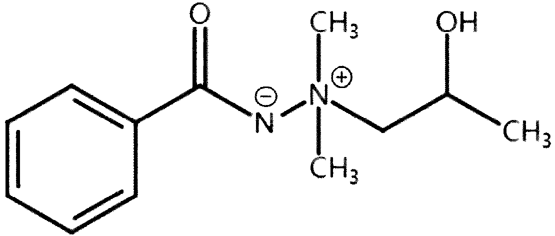

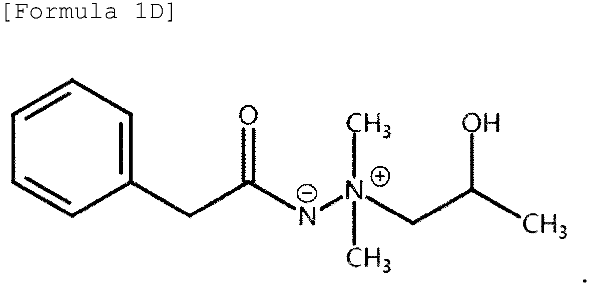

7. A non-aqueous electrolyte solution for a lithium secondary battery, the non-aqueous electrolyte solution comprising the electrolyte solution additive for a secondary battery of claim 1.

8. The non-aqueous electrolyte solution for a lithium secondary battery of claim 7, wherein the electrolyte solution additive for a secondary battery is present in an amount of 0.1 wt% to 10.0 wt% based on a total weight of the non-aqueous electrolyte solution for a lithium secondary battery.

9. The non-aqueous electrolyte solution for a lithium secondary battery of claim 7, further comprising a lithium salt and a non-aqueous organic solvent.

10. The non-aqueous electrolyte solution for a lithium secondary battery of claim 7, further comprising at least one other additive selected from a halogen-unsubstituted or substituted carbonate-based compound, a sultone-based compound, a sulfate-based compound, a phosphate-based or phosphite-based compound, a borate-based compound, a nitrile-based compound, an amine-based compound, a silane-based compound, or a lithium salt-based compound.

11. A lithium secondary battery comprising:
a positive electrode including a positive electrode active material;
a negative electrode including a negative electrode active material;
a separator disposed between the negative electrode and the positive electrode; and
the non-aqueous electrolyte solution for a lithium secondary battery of claim 7.
